# DEMANDE DE BREVET EUROPEEN

(11) **EP 4 390 741 A1**
(43) Date de publication de la demande: **26.06.2024**
(21) Numéro de dépôt: 23217932.5
(22) Date de dépôt: 19.12.2023
(51) Int. Cl.: G06F 21/57, G06F 21/64

(54) **SÉCURISATION D'UN SYSTÈME DE FICHIERS D'UN SYSTÈME AUTONOME À DISTANCE**

(30) Priorité: 21.12.2022 FR 2214050
(71) Demandeur: THALES, 92190 Meudon (FR)
(72) Inventeur: VITTOZ, Fabien, 31036 TOULOUSE (FR); PERNOT, Alexis, 31036 TOULOUSE (FR)
(74) Mandataire: Lavoix

(57) **Abrégé**

L'invention concerne un dispositif de sécurisation (24) d'un système de fichiers d'un système autonome à distance (10) utilisant un système d'exploitation (18) associé audit système de fichiers présentant une double partition permettant des mises à jour A/B, ledit système autonome à distance étant mis à jour par mise à jour atomique, et comprenant en outre un outil (22) de démarrage sécurisé, ledit dispositif de sécurisation étant configuré pour signer ledit système de fichiers en s'appuyant sur une cryptographie asymétrique à deux clés comprenant une clé publique et une clé privée, la clé publique étant intégrée dans le kernel dudit système d'exploitation,
la durée de vie de ladite clé privée étant limitée, lesdites deux clés publique et privée étant regénérées par ledit dispositif de sécurisation à chaque production d'une nouvelle mise à jour atomique dudit système autonome à distance.

## Description

La présente invention concerne un dispositif de sécurisation d'un système de fichiers d'un système autonome à distance, ledit système autonome à distance utilisant un système d'exploitation associé audit système de fichiers dudit système autonome à distance, le système autonome à distance utilisant en outre une double partition de système de fichiers permettant des mises à jour A/B, ledit système autonome à distance étant en outre propre à être mis à jour par mise à jour atomique, le système autonome à distance comprenant en outre un outil de démarrage sécurisé.

La présente invention concerne également un tel système autonome à distance, ledit système autonome à distance utilisant un système d'exploitation associé audit système de fichiers dudit système autonome à distance, le système autonome à distance utilisant en outre une double partition de système de fichiers permettant des mises à jour A/B, ledit système autonome à distance étant en outre propre à être mis à jour par mise à jour atomique, le système autonome à distance comprenant en outre un outil de démarrage sécurisé.

L'invention concerne également un procédé de sécurisation d'un système de fichiers d'un tel système autonome à distance.

L'invention concerne également un programme d'ordinateur associé audit procédé.

L'invention se situe dans le domaine des systèmes autonomes utilisant au moins un système d'exploitation OS (de l'anglais *Operating system*), par exemple le système d'exploitation Linux, et qui sont administrés à distance (de l'anglais *Over The Air*).

Une telle administration à distance nécessite la capacité de gérer de manière atomique les mises à jour d'un tel système autonome à distance dont le système de fichiers, aussi appelé également rootfs, est, afin de maitriser les mises à jour, couramment de type A/B, c'est-à-dire comprenant deux systèmes de fichiers A et B, alternativement actifs. Plus précisément, si le système de fichiers A est actif alors la mise à jour se fera sur le système de fichiers B, et vice versa). Une fois la mise à jour effectuée, le système redémarre et bascule sur le système de fichiers B. Si la mise à jour est défectueuse, le système peut revenir sur l'ancienne version, à savoir le système de fichiers A, toujours disponible. Le système de fichiers actif est en lecture seule et aucune mise à jour partielle n'est possible afin de garantir le bon fonctionnement après une mise à jour. Les données persistantes, par exemple de configuration, les données, sont stockées sur une partition, dédiée si besoin, du média correspondant au support de stockage physique (e.g. disque dur, mémoire flash, eMMC (de l'anglais *Embedded MultiMediaCard*...)), le média étant formaté avec plusieurs partitions qui contiennent chacune un système de fichiers.

De plus, une telle mise à jour atomique consiste à mettre à jour en une seule fois, à la fois le noyau du système d'exploitation, appelé par la suite kernel, ainsi que conjointement le système de fichiers, et ce sur une même partition du média (i.e. du système autonome à distance). Ce couple, à savoir le kernel et le système de fichiers est donc lié, et il est difficile, voire impossible, de mettre à jour ces deux éléments de manière indépendante.

La vérification en intégrité et authenticité des fichiers d'un tel système autonome à distance, utilisant notamment un système d'exploitation Linux est un impératif pour ces systèmes dont il faut notamment s'assurer que les binaires qui s'exécutent proviennent bien du fournisseur de logiciel d'origine et n'ont pas été altérés.

En général, de tels systèmes autonomes à distance comprennent également un outil matériel (de l'anglais *hardware*) de démarrage sécurisé (de l'anglais *secure boot),* cependant un tel outil garantit l'intégrité et l'authenticité uniquement du kernel et du chargeur d'amorçage (de l'anglais *bootloader*) propre à lancer le (ou chaque) système d'exploitation, sans permettre la vérification de l'intégrité et l'authenticité des éléments du système de fichiers.

Actuellement, la vérification de l'intégrité et l'authenticité des éléments du système de fichiers exploite la confiance acquise dans le kernel du système d'exploitation, notamment Linux, via l'outil matériel de démarrage sécurisé (*secure boot*) afin de pouvoir utiliser un mécanisme logiciel complémentaire qui repose généralement sur deux types de solutions.

La première solution est basée sur des calculs d'empreintes (de l'anglais *hash*) des blocs de la partition du média via un arbre de Merkle, également appelé arbre de hachage, propre à produire une empreinte unique (de l'anglais *hash root*) servant de référence pour l'intégrité. Plus précisément, les arbres de Merkle sont des arbres binaires utilisés pour effectuer de la validation de données. Pour ce faire, chaque feuille de l'arbre va contenir l'empreinte cryptographique (hash) correspondant à une partie de la donnée à valider. Chaque noeud de l'arbre va également contenir une empreinte. Cette empreinte est obtenue en concaténant l'empreinte des deux enfants et en passant le résultat dans une fonction pour créer une nouvelle empreinte. Il se construit alors une dépendance générale où la valeur de chaque noeud dépend des valeurs de ses noeuds enfants pour obtenir *in fine* une empreinte unique (*hash root*). Cette empreinte unique est alors intégrée dans le kernel du système d'exploitation, notamment Linux, et est vérifiée au démarrage et dynamiquement.

Cette première solution est toutefois incompatible avec la mise en oeuvre de mises à jour atomiques car l'ajout de l'empreinte dans le kernel modifie inévitablement l'empreinte du secteur du disque contenant le kernel et donc rend caduque l'empreinte unique.

La deuxième solution est basée sur une vérification par signature de l'intégrité et l'authenticité des fichiers, en utilisant par exemple pour un système d'exploitation de type Linux, un sous-système Linux IMA (de l'anglais *Integrity Measurement Architecture*) avec le module EVM (de l'anglais *Extended Verification Module*).

Cette deuxième solution basée sur une vérification de signature nécessite la création d'un couple de clés privée/publique de cryptographie asymétrique. La clé privée est utilisée pour signer le kernel et le chargeur d'amorçage (de l'anglais *bootloader*), tandis que la clé publique est stockée sur le matériel sur lequel s'exécute le système d'exploitation OS, par exemple un processeur iMX6, via l'engravage de son empreinte (de l'anglais *hash*) dans le processeur. Cet engravage de la clé publique est notamment effectué en s'appuyant sur un mécanisme physique reposant sur des fusibles OTP (de l'anglais *One Time-Programmable*). Ces fusibles présentent la caractéristique de ne pouvoir être écrits qu'une seule et unique fois, tout en pouvant cependant être lus autant de fois que nécessaire. Ils permettent ainsi le stockage sécurisé de la clé publique dans le matériel et ce de manière inaltérable.

Cette deuxième solution présente l'avantage d'être compatible avec la mise en oeuvre de mises à jour atomiques car la clé publique peut être ajoutée dans le kernel sans impact sur le calcul d'intégrité tout en permettant la gestion de mise à jour atomique.

Toutefois, une telle gestion de clés s'avère généralement complexe pour la rendre simple et sécurisée industriellement.

En effet, dans ce contexte, il existe actuellement différentes solutions pour sécuriser une clé privée mais qui apportent toutes des contraintes industrielles, techniques et financières quand on doit utiliser ce mécanisme pour signer un système de fichiers.

Une première solution actuelle de sécurisation de la clé privée nécessite une interconnexion avec une infrastructure à clé publique de gestion de clés PKI (de l'anglais *Public Key Infrastructure*) mais cela est peu performant, complexe et coûteux à mettre en oeuvre car cela nécessite par exemple de modifier le logiciel de signature intégré au kernel, notamment le logiciel de signature open source Linux appelé « evmctl », qui est sous licence spécifique « GPLv2 » ce qui n'est pas forcément acceptable industriellement, en effet un tel logiciel de signature n'est pas fait pour se connecter à cette PKI, car il n'est prévu que pour travailler avec une clé privée locale.

Une deuxième solution actuelle de sécurisation de la clé privée implique l'utilisation d'un module local de sécurité matériel HSM (de l'anglais *Hardware Security Module*), mais requiert, comme la première solution, également de développer une couche logicielle pour interfacer le logiciel de signature avec le composant HSM qui implique également par ailleurs des coûts élevés.

Une troisième solution actuelle de sécurisation de la clé privée est basée sur l'utilisation d'un module local plateforme de confiance TPM (de l'anglais *Trusted Platform Module*) pour stocker la clé privée, mais requiert, comme les solutions précédentes de développer une couche logicielle pour interfacer le logiciel de signature avec le composant TPM, qui rajoute par ailleurs des contraintes sur la machine servant à produire l'image du système de fichiers, en notant que l'utilisation d'un matériel « asset Hardware » complexifie, voire empêche, la production logicielle automatisée sur une informatique en nuage (de l'anglais *cloud*).

Une quatrième solution actuelle est basée sur l'utilisation d'une clé privée auto signée en local, ce qui est performant et compatible avec la mise en oeuvre de mises à jour atomiques d'un système autonome à distance, mais nécessite en revanche des contraintes organisationnelles complexes pour protéger, tracer, surveiller le ou les accès à la clé privée, telles qu'un stockage sur disque chiffré, avec une sécurité plutôt relative et une difficulté d'identifier une fuite de donnée ou de détecter une compromission (i.e. piratage) de la clé privée. En effet, si la clé privée est interceptée, la confiance dans le système de fichiers est perdue, car l'intercepteur aura le moyen de modifier les contenus tout en validant la vérification avec la clé publique)
L'invention a pour objet de remédier aux inconvénients de l'état de la technique en proposant une solution alternative, plus simple et plus sécurisée industriellement, de création et gestion de couple(s) clés privé/publique dédié(s) à la vérification de signature.

A cet effet, l'invention propose un dispositif de sécurisation d'un système de fichiers d'un système autonome à distance, ledit système autonome à distance utilisant un système d'exploitation associé audit système de fichiers dudit système autonome à distance, le système autonome à distance utilisant en outre une double partition de système de fichiers permettant des mises à jour A/B, ledit système autonome à distance étant en outre propre à être mis à jour par mise à jour atomique, le système autonome à distance comprenant en outre un outil de démarrage sécurisé, ledit dispositif de sécurisation étant configuré pour signer ledit système de fichiers en s'appuyant sur une cryptographie asymétrique à deux clés comprenant une clé publique et une clé privée, la clé publique étant intégrée dans le kernel dudit système d'exploitation, la durée de vie de ladite clé privée étant limitée, lesdites deux clés publique et privée étant regénérées par ledit dispositif de sécurisation à chaque production d'une nouvelle mise à jour atomique dudit système autonome à distance.

Ainsi la présente invention apporte une solution à la sécurisation de la clé privée dans le cas d'une solution à base de clé auto-signée afin de conserver un mécanisme simple à mettre en oeuvre plutôt que de passer par une autorité externe pour générer les clés.

Plus précisément, la solution selon la présente invention utilise une clé privée volatile au sens où sa durée de vie est limitée et où les deux clés publique et privée sont regénérées par le dispositif de sécurisation à chaque production d'une nouvelle mise à jour atomique du système autonome à distance. Ainsi la complexité de sécurisation de cette clé privée, dont le besoin est quasi inexistant, car très limité dans le temps, est réduite, et la mise à jour du système de fichiers repassera par une mise à jour complète du système autonome à distance avec un nouveau couple de clé publique/privée associée à cette production en tant que telle de cette nouvelle mise à jour, une même mise à jour pouvant par la suite être diffusée à plusieurs systèmes autonomes à distance distincts.

Le dispositif de sécurisation d'un système de fichiers d'un système autonome à distance proposé selon la présente invention peut également présenter une ou plusieurs des caractéristiques ci-dessous, prises indépendamment ou selon toutes les combinaisons techniquement envisageables :
- ladite clé privée est configurée pour signer une unique fois ledit système de fichiers ;
- la durée de vie dudit dispositif de sécurisation est également limitée ;
- ledit dispositif de sécurisation est un conteneur Docker.

L'invention a également pour objet un système autonome à utilisant un système d'exploitation associé à un système de fichiers dudit système autonome à distance, le système autonome à distance utilisant en outre une double partition de système de fichiers permettant des mises à jour A/B, ledit système autonome à distance étant en outre propre à être mis à jour par mise à jour atomique, le système autonome à distance comprenant en outre un outil de démarrage sécurisé, le système autonome à distance comprenant le dispositif de sécurisation selon la présente invention tel que précité.

Le système autonome à distance proposé selon la présente invention peut également présenter la caractéristique selon laquelle ledit système d'exploitation est un système d'exploitation Linux utilisant le mécanisme de signature fournit par IMA/EVM Linux.

L'invention a également pour objet un procédé de sécurisation d'un système de fichiers d'un système autonome à distance, ledit système autonome à distance utilisant un système d'exploitation associé audit système de fichiers dudit système autonome à distance, le système autonome à distance utilisant en outre une double partition de système de fichiers permettant des mises à jour A/B, ledit système autonome à distance étant en outre propre à être mis à jour par mise à jour atomique, le système autonome à distance comprenant en outre un outil de démarrage sécurisé,
le procédé comprenant une phase de signature du système de fichiers s'appuyant sur une cryptographie à deux clés comprenant une clé publique et une clé privée, ladite phase de signature du système de fichiers comprenant les étapes suivantes :
- génération et intégration de la clé publique dans le kernel dudit système d'exploitation ;
- génération d'une clé privée de signature dudit système de fichiers, la durée de vie de ladite clé privée étant limitée ;
- signature et sécurisation dudit système de fichiers en utilisant ladite clé privée à durée de vie limitée.

Le procédé de sécurisation d'un système de fichiers d'un système autonome à distance proposé selon la présente invention peut également présenter une ou plusieurs des caractéristiques ci-dessous, prises indépendamment ou selon toutes les combinaisons techniquement envisageables :
- le procédé comprend en outre une étape de destruction sécurisée de ladite clé privée, ladite étape de destruction étant mise en oeuvre après ladite signature ;
- ladite destruction est un effacement multi-passes ;
- le procédé comprend en outre, après ladite étape de signature, une étape de stockage de ladite clé privée dans un conteneur chiffré dont la clé d'ouverture est générée aléatoirement sans être sauvegardée.

L'invention a également pour objet un programme d'ordinateur comportant des instructions logicielles qui, lorsqu'elles sont exécutées par un ordinateur, mettent en oeuvre un procédé de sécurisation d'un système de fichiers d'un système autonome à distance tel que défini ci-dessus.

D'autres caractéristiques et avantages de l'invention ressortiront de la description qui en est donnée ci-dessous, à titre indicatif et nullement limitatif, en référence aux figures annexées, parmi lesquelles :
[Fig 1] la figure 1 représente schématiquement un système autonome à distance et un dispositif de sécurisation d'un système de fichiers d'un tel système autonome à distance selon un mode de réalisation de l'invention ;
[Fig 2] la figure 2 est un organigramme d'un procédé de sécurisation d'un système de fichiers d'un système autonome à distance selon un mode de réalisation de l'invention ;
[Fig 3] la figure 3 illustre les effets de sécurisation associés à chaque étape du procédé illustré par la figure 2.

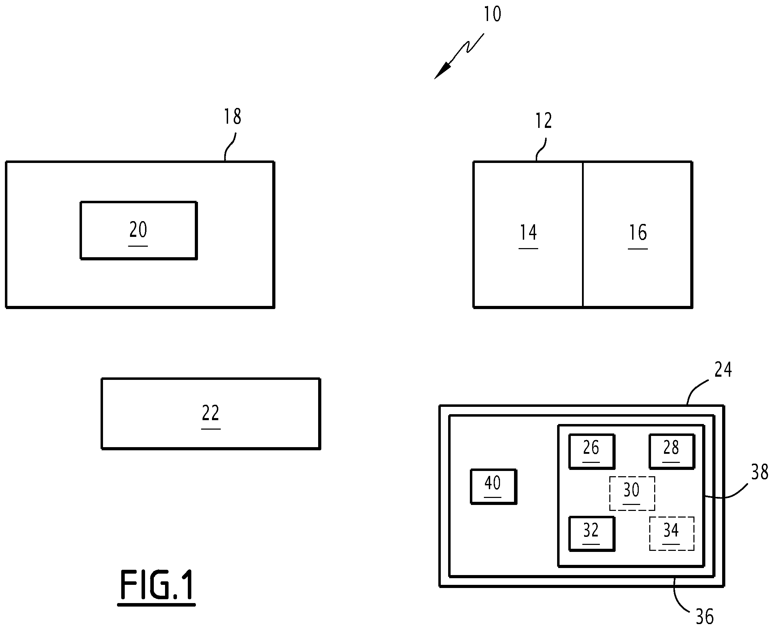

Comme indiqué précédemment, la figure 1 représente schématiquement un système autonome à distance 10 et un dispositif de sécurisation d'un système de fichiers d'un tel système autonome à distance selon un mode de réalisation de l'invention.

Plus précisément, un tel système autonome à distance 10 comprend tout d'abord, et utilise, un média 12, présentant une double partition de type A 14, et B 16, permettant des mises à jour A/B. Chaque partition A 14 et B 16 dispose de son système de fichiers.

Par ailleurs, ledit système autonome à distance 10 étant en outre propre à être mis à jour par mise à jour atomique tel que définie précédemment.

Le système autonome à distance 10 comprend en outre, et utilise, au moins un système d'exploitation 18 dont le noyau 20 est par la suite appelé kernel. Ce système d'exploitation 18 est associé au système de fichiers dudit système autonome à distance 10.

En complément optionnel, ledit système d'exploitation 18 est un système d'exploitation 18 Linux utilisant le mécanisme de signature fournit par IMA/EVM Linux, pour compiler la clé publique avec le kernel conformément à ce système IMA et au module EVM de Linux, pour assurer la vérification.

Le système autonome à distance 10 comprend également un outil 22 de démarrage sécurisé (de l'anglais *secure boot*).

Selon la présente invention, le système autonome à distance 10 comprend également un dispositif de sécurisation 24 du système de fichiers du système autonome à distance 10.

Ledit dispositif de sécurisation 24 est configuré pour signer ledit système de fichiers en s'appuyant sur une cryptographie asymétrique à deux clés comprenant une clé publique et une clé privée, la clé publique étant par la suite intégrée dans le kernel 20 dudit système d'exploitation 18.

Selon la présente invention, le dispositif de sécurisation 24 est spécifiquement configuré pour générer une clé privée dont la durée de vie est limitée, les deux clés publique et privée étant regénérées par le dispositif de sécurisation 24 à chaque production d'une nouvelle mise à jour atomique dudit système autonome à distance 10 (ce qui revient à une régénération des deux clés publique et privée à chaque production d'une version d'un système autonome à distance 10, N systèmes autonomes à distance selon cette version pouvant être installés sur N machines distinctes par exemple) .

En complément optionnel avantageux, ladite clé privée est configurée pour signer une unique fois ledit système de fichiers.

Pour signer ledit système de fichiers s'appuyant sur une cryptographie asymétrique à deux clés comprenant une clé publique et une clé privée, le dispositif de sécurisation 24 comprend, selon le mode de réalisation de la figure 1, un premier module de génération 26 configuré pour générer la clé publique puis pour l'intégrer dans le kernel 20 dudit système d'exploitation 18.

De plus, selon le mode de réalisation de la figure 1, le dispositif de sécurisation 24 comprend en outre un deuxième module de génération 28 configuré pour générer la clé privée de signature dudit système de fichiers, la durée de vie de ladite clé privée étant limitée.

Selon une variante, le premier module de génération 26 et le deuxième module de génération 28 sont distincts. Selon une autre variante, le premier module de génération 26 et le deuxième module de génération 28 partagent un même outil de génération de clés configuré pour générer directement le couple clé privée/clé publique.

Selon un aspect optionnel complémentaire, le dispositif de sécurisation 24 comprend en outre un conteneur chiffré 30, représenté à l'aide de tirets, ledit conteneur chiffré 30 étant configuré pour stocker ladite clé privée, la clé d'ouverture dudit conteneur chiffré 30 étant générée aléatoirement sans être sauvegardée.

Selon le mode de réalisation de la figure 1, le dispositif de sécurisation 24 comprend en outre un module 32 de signature configuré pour signer et sécuriser ledit système de fichiers en utilisant ladite clé privée à durée de vie limitée.

Selon un aspect optionnel complémentaire, le dispositif électronique de sécurisation 24 comprend en outre un module 34 de destruction, représenté à l'aide de tirets, configuré pour détruire de manière sécurisée ladite clé privée, et ce après son utilisation pour signer et sécuriser ledit système de fichiers. Il est à noter que l'utilisation du conteneur chiffré 30 indiqué précédemment permet d'éviter l'utilisation du module 34 de destruction, et inversement.

Selon une variante optionnelle, un tel module 34 de destruction optionnel est propre à mettre en oeuvre un effacement multi-passes.

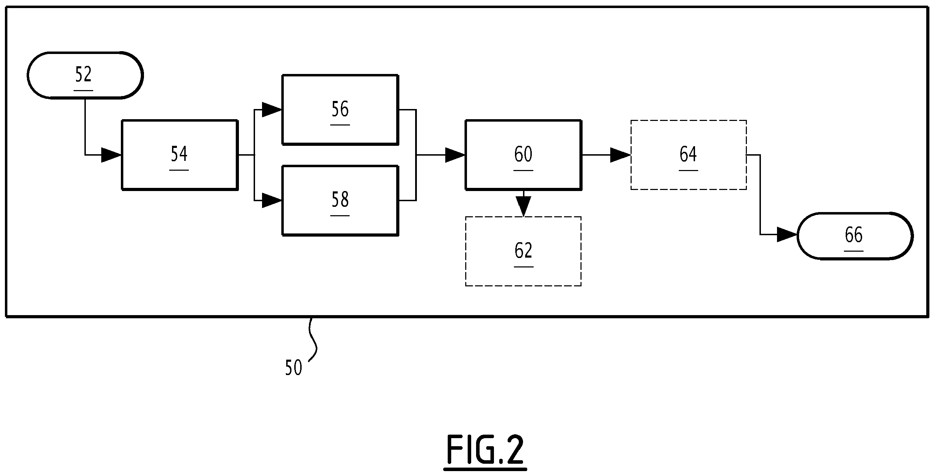

Le dispositif électronique de sécurisation 24 est ainsi configuré pour mettre en oeuvre au moins en partie le procédé de sécurisation d'un système de fichiers d'un système autonome à distance tel que détaillé par la suite en relation avec la figure 2.

Selon un aspect illustré par la figure 1, le dispositif électronique de sécurisation 24 comprend une unité 36 de traitement d'informations formée par exemple d'une mémoire 38 et d'un processeur 40 associé à la mémoire 38.

Selon un exemple particulier, le premier module de génération 26, et le deuxième module de génération 28, le module 32 de signature, et optionnellement le conteneur chiffré 30 ou le module 34 de destruction sont réalisés chacun sous forme d'un logiciel, ou d'une brique logicielle, exécutables par le processeur 40 du dispositif électronique de sécurisation 24 selon la présente invention. La mémoire 38 du dispositif électronique de sécurisation 24 est alors apte à stocker un premier logiciel de génération et intégration de la clé publique dans le kernel 20 dudit système d'exploitation 22, un deuxième logiciel de génération d'une clé privée de signature dudit système de fichiers, la durée de vie de ladite clé privée étant limitée, un logiciel de signature et sécurisation dudit système de fichiers en utilisant ladite clé privée à durée de vie limitée, et optionnellement un logiciel de conteneur chiffré dont la clé d'ouverture est générée aléatoirement sans être sauvegardée, ou un logiciel de destruction sécurisée de ladite clé privée après son utilisation pour signature. Le processeur 40 est alors apte à exécuter chacun de ces logiciels.

En variante non représentée, le premier module de génération 26, et le deuxième module de génération 28, le module 32 de signature, et optionnellement le conteneur chiffré 30 ou le module 34 de destruction sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Spécifie Integrated Circuit*).

Lorsque le dispositif électronique de sécurisation 24 est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est par exemple un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM, EEPROM, FLASH, MVRAM), une carte magnétique ou une carte optique. Sur le support lisible est alors mémorisé un programme d'ordinateur comprenant des instructions logicielles.

Il est à noter que ledit dispositif de sécurisation 24 qui sert à produire le nouveau système et donc utilise la clé privée volatile selon la présente invention, est lui-même classiquement sécurisé pour être lui-même protégé correctement afin d'assurer la protection de la clé privée, ce qui revient à proscrire l'utilisation d'un dispositif sans aucune protection, sans mise à jour, connecté à l'Internet, et en conséquence vulnérable.

Selon un aspect optionnel complémentaire, la durée de vie dudit dispositif de sécurisation 24 lui-même est également limitée.

Selon un autre aspect optionnel complémentaire, ledit dispositif de sécurisation 24 est un conteneur Docker.

On décrit désormais ci-après, notamment en relation avec le mode de réalisation de la figure 2, un exemple de mise en oeuvre d'un procédé 50 de sécurisation du système de fichiers du système autonome à distance 10 selon l'exemple de la figure 1, le procédé 50 comprenant une phase de signature du système de fichiers s'appuyant sur une cryptographie à deux clés comprenant une clé publique et une clé privée, ladite phase de signature du système de fichiers comprenant les étapes suivantes :
- génération et intégration de la clé publique dans le kernel dudit système d'exploitation ;
- génération d'une clé privée de signature dudit système de fichiers, la durée de vie de ladite clé privée étant limitée ;
- signature et sécurisation dudit système de fichiers en utilisant ladite clé privée à durée de vie limitée.

Le mode de réalisation de la figure 2, correspond à une mise en oeuvre dudit procédé 50 en considérant que le système d'exploitation 18 de la figure 1 est un système d'exploitation Linux.

Selon cette mise en oeuvre, une initialisation de paquets, non représentée est tout d'abord mise en oeuvre. Puis, la création du système en tant que telle est effectuée et c'est au cours de cette création que le procédé 50 de sécurisation du système de fichiers du système autonome à distance 10 selon la présente invention est mis en oeuvre.

Plus précisément, de manière classique une étape 52 de génération du système de fichiers est tout d'abord mise en oeuvre.

Puis, selon l'exemple de la figure 2, la génération de la clé publique et la génération de la clé privée précitée sont mise en oeuvre simultanément au sein de l'étape 54 de génération d'un couple de clé privée/clé publique, la clé privée étant configurée pour présenter une durée de vie limitée (i.e. la clé privée étant volatile).

Lors de l'étape 56, la compilation (i.e. intégration) de la clé publique dans le kernel 20 est mise en oeuvre.

En parallèle, lors de l'étape 58 la création des fichiers du système de fichiers est mise en oeuvre.

Puis selon une étape 60, la signature et sécurisation des fichiers en utilisant la clé privée à durée limitée est effectuée.

En complément optionnel, le procédé 50 de sécurisation d'un système de fichiers d'un système autonome à distance comprend en outre une étape 62, représentée à l'aide de tirets, de stockage de ladite clé privée dans un conteneur chiffré dont la clé d'ouverture est générée aléatoirement sans être sauvegardée.

A titre d'alternative à l'étape optionnelle 62, l'étape 60 de signature précitée est suivie d'une étape 64 également optionnelle de destruction sécurisée de ladite clé privée.

Selon un aspect optionnel, une telle destructions 64 est mise en oeuvre par effacement multi-passes (i.e. par passes multiples).

A l'issue des étapes 52 à 60, avec optionnellement les étapes 62 et 64, selon une étape 66 un système de fichiers signés et immuable est alors obtenu.

Ainsi, le procédé 50 selon la présente invention est basé sur l'utilisation innovante d'une clé privée volatile, c'est-à-dire que la clé aura une durée de vie limitée, et selon un aspect optionnel avantageux, limité à la période de signature du système de fichiers.

Un acteur malveillant qui souhaiterait voler la clé privée devra alors soit récupérer la clé sur le système après son extinction, ce qui est qualifié par la suite d'attaque post-mortem notamment par vol de disque dur ou installation/exécution d'un logiciel malveillant (de l'anglais *malware*) après la production du système de fichiers, soit intercepter la clé en ayant au préalable compromis le système contenant la clé privée, ce qui est qualifié par la suite d'attaque dynamique, en utilisant cette fois un logiciel malveillant (de l'anglais *malware*) pendant l'exécution de l'étape 60 signature en tant que telle.

En ce qui concerne les attaques post-mortem, comme indiqué précédemment, la présente invention propose, pour se protéger de telles attaques post-mortem, de mettre en place un mécanisme de stockage 62 et/ou de destruction 64 sécurisés de la clé privée.

Plus précisément, comme indiqué précédemment, pour le stockage 62 sécurisé, la présente invention propose d'utiliser un conteneur chiffré. Autrement dit, pour cette option 62 de sécurisation, il s'agit de générer et stocker la clé non pas « en clair » sur le média de stockage mais à l'intérieur d'un conteneur chiffré 30 tel que représenté sur la figure 1, tel qu'un conteneur « cryptsetup LUKS », « truecrypt » sécurisé par chiffrement de type AES-256, par exemple.

Selon une variante optionnelle permettant de renforcer la sécurisation d'un tel stockage 62, un tel conteneur chiffré 30 pourrait être créé et monté directement en mémoire volatile RAM (de l'anglais Random Access Memory).

Pour créer ce conteneur chiffré 30, le mot de passe de sécurisation sera généré aléatoirement et non sauvegardé, si bien qu'en analyse post mortem il est donc impossible de retrouver la clé d'ouverture du conteneur chiffré 30, et ce conteneur chiffré ne pourra pas être déchiffré avec les moyens actuels.

Pour l'autre option de destruction sécurisée 64, il est proposé selon cette alternative de se focaliser sur la sécurisation de la destruction de la donnée plutôt que la sécurisation de son stockage tel que décrit selon l'option ci-dessus.

Suivant le type de matériel utilisé pour stocker temporairement la clé privée, la destruction sécurisée 64, correspond, selon une première variante, déjà évoquée précédemment, à un effacement multi-passes, selon lequel un logiciel dédié est utilisé pour procéder à un effacement comprenant des successions d'écriture de données aléatoires ou non sur les anciennes puis d'effacements permettant ainsi de garantir un effacement sécurisé des données.

Selon un autre variante, mise en oeuvre lorsque le matériel utilisé pour stocker temporairement la clé privée correspond par exemple à un ou plusieurs disque(s) SSD (de l'anglais *Solid State Drive,* technologie à base de mémoire Flash), si bien que la première variante ci-dessus ne fonctionne pas, les méthodes des constructeurs, qui proposent des logiciels dédiés à leur matériel de ce type, sont utilisées pour effacer réellement les zones de mémoires flash.

En ce qui concerne les attaques dynamiques précitées, pour réduire la surface d'attaque au maximum, il est proposé, tel qu'indiqué précédemment, que la durée de vie dudit dispositif de sécurisation 24 lui-même soit également limitée.

Autrement dit, le dispositif de sécurisation 24 servant à effectuer la signature et à stocker la clé privée est lui aussi éphémère. Pour cela il est proposé d'utiliser des dispositifs virtualisés sans persistance comme par exemple un conteneur Docker correspondant à une plateforme ouverte pour le déploiement et l'exécution d'applications et qui permet d'embarquer et d'exécuter une application dans un environnement cloisonné appelé conteneur. A la différence de la virtualisation où la machine virtuelle contient un système d'exploitation complet, les outils associés et l'application hébergée, un tel conteneur Docker ne contient que les bibliothèques et les outils nécessaires à l'exécution de l'application, et fonctionne directement dans le noyau de la machine hôte. Un tel conteur Docker revient alors à la mise en oeuvre d'une isolation du moyen informatique lors de la création, de l'utilisation et de la destruction de la clé privée, ce qui permet de garantir la sécurité du procédé.

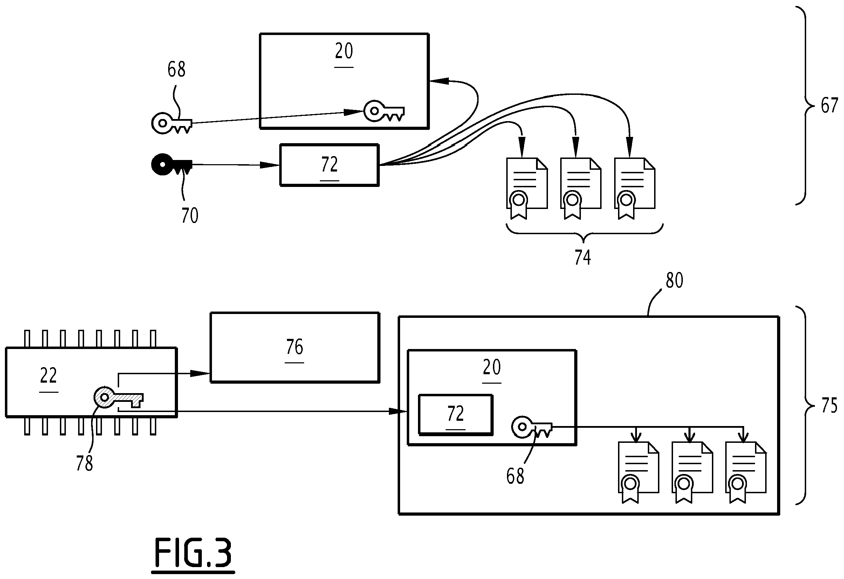

La figure 3 illustre les effets de sécurisation associés à chaque étape du procédé illustré par la figure 2.

Sur la figure 3, la vue 67 correspond à la production logicielle du système de fichiers. Selon le mode de réalisation illustré par la figure 3, les clés publique 68 et privée 70 sont par exemple générées en utilisant une boîte à outil de chiffrement telle que OpenSSL, et on utilise notamment l'outil 72 de signature fournit par IMA/EVM Linux.

Une fois que l'opération de signature est terminée, un système de fichiers signés 74 et immuable est alors obtenu, et la clé privée 70 est, selon une option détaillée précédemment, détruite de manière sécurisée pour limiter les risques d'exfiltration de cette clé privée via des méthodes forensiques (i.e. basée sur une analyse forensique également appelée investigation numérique).

Par exemple, la durée de vie de la clé privée 70 est limitée à la durée de la production logicielle du système de fichiers, soit quelques heures, par exemple deux ou trois heures, et ne sert, en tant que telle, que quelques secondes pour signer les fichiers afin d'obtenir après son utilisation le système de fichiers signés 74.

La vue 75 de la figure 3 illustre l'exécution du système autonome à distance 10. Lors de cette exécution, selon un prérequis sur lequel s'appuie la présente invention, l'outil de démarrage sécurisé (de l'anglais *secure boot*), illustré par la référence 22 sur la figure 3, implémenté par le matériel du système autonome à distance 10, va également classiquement vérifier l'intégrité du chargeur d'amorçage (de l'anglais *bootloader,* ou encore BIOS de l'anglais Basic Input Output System, ou encore UEFI de l'anglais *Unified Extensible Firmware Interface*) 76 et du kernel 20 via, par exemple, un « code ROM » (de l'anglais *Read Only Memory*), ou un logiciel embarqué (de l'anglais *Firmware*), implémentant la gestion de l'outil de démarrage sécurisé 22 et en utilisant un autre couple de clés asymétriques, dont la clé publique 78 est représentée sur la figure 3, elles-mêmes convenablement sécurisées via une sécurisation classique par infrastructure de gestion de clés publiques de type PKI (de l'anglais *Public Key Infrastructure*) ou encore via un module HSM (de l'anglais *Hardware Security Module*), etc.

Lors de cette exécution du système autonome à distance 10, sur l'exemple de la figure 3, un attaquant (i.e. acteur malveillant) pourrait tenter d'utiliser une attaque qui emploierait un nouveau couple clé publique/privée malveillantes non-représentées, et tenterait de re-signer tout le système de fichiers avec la clé privée malveillante en remplaçant par ailleurs la clé publique 68 dans le kernel 20 par sa clé publique malveillante.

Un tel attaquant serait alors avantageusement bloqué selon la présente invention, car premièrement, comme indiqué précédemment, le kernel 20 est également contrôlé par l'outil de démarrage sécurisé (de l'anglais *secure boot)* 22 qui met en oeuvre une vérification cryptographique complémentaire notamment via la clé 78.

De plus, la clé publique 68, générée lors de la production logicielle de la vue 67 de la figure 3, associée au système de fichiers, est incluse dans le kernel 20 et l'ensemble forme le tout 80 cohérent. Hors, selon la présente invention, il est impossible de modifier un quelconque fichier du tout cohérent 80 sans posséder la clé privée 70, générée lors de la production logicielle de la vue 67 de la figure 3 et du fait de sa durée de vie limitée, selon la présente invention, (i.e. clé volatile), qui n'existe avantageusement plus lors de l'exécution du système autonome à distance 10 correspondant à la vue 75 de la figure 3.

L'homme du métier comprendra que l'invention ne se limite pas aux modes de réalisation décrits, ni aux exemples particuliers de la description, les modes de réalisation et les variantes mentionnées ci-dessus étant propres à être combinés entre eux pour générer de nouveaux modes de réalisation de l'invention.

La présente invention propose ainsi une solution sécurisation pour la vérification d'intégrité d'un système de fichiers, notamment de type Linux. Cette solution à base de clé privée volatile ne rend plus possible la modification ou l'altération du système de fichiers car la clé privée n'existera plus ce qui complexifie la mise en place d'une attaque persistante sur ce type de système pour une personne malveillante.

Comme indiqué précédemment, la clé publique, quant à elle, est compilée avec le kernel pour assurer la vérification conformément au système IMA et au module EVM de Linux, l'intégrité et l'authenticité du kernel étant elles-mêmes protégées par l'outil matériel de démarrage sécurisé (de l'anglais *secure boot*).

Comme la mise à jour du système de fichiers est atomique, l'ajout/modification/suppression d'un fichier nécessite de regénérer tout ce système de fichiers ce qui implique donc une génération d'une nouvelle paire de clé publique/privée. Un nouveau kernel est également compilé en incluant la nouvelle clé publique.

Ainsi, la solution proposée selon la présente invention est avantageuse car elle dispense de prendre des mesures techniques ou organisationnelles lourdes pour gérer la protection de clé privée. L'association d'une mise à jour atomique incluant le système de fichiers et le kernel ainsi que la génération des clés de signature unique (i.e. à usage unique pour signer une unique fois le système de fichiers), offre de bénéficier d'une solution simple et ultra sécurisée de la clé privée pour s'affranchir des contraintes liées à sa gestion.

## Revendications

1. Dispositif de sécurisation (24) d'un système de fichiers d'un système autonome à distance (10), ledit système autonome à distance utilisant un système d'exploitation (18) associé audit système de fichiers dudit système autonome à distance, le système autonome (10) à distance utilisant en outre une double partition de système de fichiers permettant des mises à jour A/B,
ledit système autonome à distance (10) étant en outre propre à être mis à jour par mise à jour atomique,
le système autonome à distance (10) comprenant en outre un outil (22) de démarrage sécurisé,
ledit dispositif de sécurisation étant configuré pour signer ledit système de fichiers en s'appuyant sur une cryptographie asymétrique à deux clés comprenant une clé publique et une clé privée, la clé publique étant intégrée dans le kernel dudit système d'exploitation, ledit dispositif de sécurisation étant **caractérisé en ce que** la durée de vie de ladite clé privée est limitée, lesdites deux clés publique et privée étant regénérées par ledit dispositif de sécurisation à chaque production d'une nouvelle mise à jour atomique dudit système autonome à distance.

2. Dispositif selon la revendication 1, dans laquelle ladite clé privée est configurée pour signer une unique fois ledit système de fichiers.

3. Dispositif selon la revendication 1 ou 2, **caractérisé en ce que** la durée de vie dudit dispositif de sécurisation (24) est également limitée.

4. Dispositif selon l'une quelconque des revendications précédentes, dans lequel ledit dispositif de sécurisation (24) est un conteneur Docker.

5. Système (10) autonome à distance (10) utilisant un système d'exploitation (18) associé à un système de fichiers dudit système autonome à distance,
le système autonome à distance (10) utilisant en outre une double partition de système de fichiers permettant des mises à jour A/B,
ledit système autonome à distance (10) étant en outre propre à être mis à jour par mise à jour atomique,
le système autonome à distance (10) comprenant en outre un outil de démarrage sécurisé,
le système autonome à distance étant **caractérisé en ce qu'**il comprend le dispositif de sécurisation selon l'une quelconque des revendications précédentes.

6. Système (10) selon la revendication 5, dans lequel ledit système d'exploitation est un système d'exploitation Linux utilisant le mécanisme de signature fournit par IMA/EVM Linux.

7. Procédé (50) de sécurisation d'un système de fichiers d'un système autonome à distance, ledit système autonome à distance utilisant un système d'exploitation associé audit système de fichiers dudit système autonome à distance,
le système autonome à distance utilisant en outre une double partition de système de fichiers permettant des mises à jour A/B,
ledit système autonome à distance étant en outre propre à être mis à jour par mise à jour atomique,
le système autonome à distance comprenant en outre un outil de démarrage sécurisé,
le procédé comprenant une phase de signature du système de fichiers s'appuyant sur une cryptographie à deux clés comprenant une clé publique et une clé privée, ladite phase de signature du système de fichiers comprenant les étapes suivantes :
- génération (54) et intégration (56) de la clé publique dans le kernel dudit système d'exploitation ;
- génération (54) d'une clé privée de signature dudit système de fichiers, la durée de vie de ladite clé privée étant limitée ;
- signature et sécurisation (60) dudit système de fichiers en utilisant ladite clé privée à durée de vie limitée.

8. Procédé selon la revendication 7 comprenant en outre une étape de destruction sécurisée de ladite clé privée, ladite étape de destruction étant mise en oeuvre après ladite signature.

9. Procédé selon la revendication 8, dans lequel ladite destruction est un effacement multi-passes.

10. Procédé selon l'une quelconque des revendications 7 à 9, comprenant en outre, après ladite étape de signature, une étape (62) de stockage de ladite clé privée dans un conteneur chiffré dont la clé d'ouverture est générée aléatoirement sans être sauvegardée.
